# EUROPEAN PATENT SPECIFICATION

(11) **EP 1 733 532 B1**
(45) Date of publication and mention of the grant of the patent: **25.06.2008**
(21) Application number: 05715139.1
(22) Date of filing: 30.03.2005
(51) Int. Cl.: H04L 29/06

(54) **A FILTER AND A METHOD OF FILTERING ELECTRONIC MESSAGES**
EIN FILTER UND EIN VERFAHREN ZUR FILTERUNG ELEKTRONISCHER NACHRICHTEN
FILTRE ET TECHNIQUE DE FILTRAGE DE MESSAGES ELECTRONIQUES

(30) Priority: 30.03.2004 DK 200400508; 30.03.2004 US 557405 P
(43) Date of publication of application: 20.12.2006
(73) Proprietor: Imencro Software SA, 1700 Friburg (CH)
(72) Inventor: Larsen, Martin Wahlers, CH-1734 Tentlingen (CH)
(74) Representative: Inspicos A/S
(86) International application number: PCT/DK2005/000219
(87) International publication number: WO 2005/096584

(56) References cited:
- WO-A-01/16695
- WO-A-03/044617
- US-A- 5 377 354
- US-A1- 2003 009 698
- US-A1- 2003 212 791
- US-B1- 6 199 102
- US-B1- 6 546 416

## Description

### INTRODUCTION

The present invention relates to a filter for filtering electronic messages e.g. for discharging spam mail from an electronic mailing system. In particular, the invention relates to a filter for filtering electronic messages, said filter comprising:
- storage space for an allowed list comprising identification insignias of senders which have been approved for sending messages to a recipient,
- means for receiving a first electronic message from a sender,
- means for capturing from the message an identification insignia of the sender,
- means for capturing from the message an identification insignia of the recipient,
- first check means for comparing the identification insignia of the sender with the allowed list for determining either to withhold the message or to forward the message to the recipient,
- means for storing the message and the insignia of the sender,
- means for generating a return mail to the sender in case the identification insignia of the sender is not included in the allowed list, the means for returning the mail being adapted to include in the returned mail a unique code, and a message for the sender to reply to the return mail by sending it back without changing the unique code,
- means for storing the unique code and relating it to the insignia of the sender, and
- second check means for receiving a second electronic message and for recognising the second message being a reply to the returned mail.

Accordingly, the filter is of the kind wherein a sender's address is compared with a list of allowed addresses, and if the address is not contained therein, a reply is generated for the sender requesting completion of a registration process.

### BACKGROUND OF THE INVENTION

In parallel with the increasing growth of popularity of electronic mailing systems for exchanging information globally, the desire of reducing the number of received messages by automatically filtering out unwanted messages has increased. Spam mail, i.e. mail messages which are forwarded to a large number of unknown recipients e.g. with the purpose of advertising or in general for distributing information can slow down mail servers severely by occupying processor and storage resources, and, in worst case, the users may in annoyance over a large number of irrelevant messages overlook messages of importance.

Filters of the above described kind exist already. In US 6,199,102 the prompt is designed to require manual operation whereby an automatic reply set up by a computer system, e.g. a computer system adapted for forwarding messages to a large group of recipients, are filtered out. The required manual operation could be a required response to a question, e.g. "what is the colour of the sky", or "what is the current month". In such a system, there is always a potential risk that persons of interest to the recipient get annoyed over the troubles, and e.g. after having given a wrong answer, e.g. by misspelling the colour of the sky, give up trying to reach the recipient.

US 2003/009698 describes a method and a system for filtering spam according to which a confirmation request email is sent to the senders e-mail address to confirm its existence and identity. Since spammers typically don't receive e-mails, a mail message can be considered as spam if no reply is received. The method implies a relatively large amount of e-mail traffic and can therefore be inconvenient.

In US 2003212791, mail is authorised by the steps of identifying an unauthorised mail before delivery to the recipient by comparison of details of the sender with details contained on a list of authorised senders. Upon receipt of verification, the sender is added to a list of authorised senders and the electronic mail is forwarded to the recipient.

### DESCRIPTION OF THE INVENTION

It is an object of the present invention to enable filtering of undesired mails from desired mails without requiring burdensome implication of the sending or the receiving part.

This object is solved by a filter having the features of claim 1 and by a method having the features of claim 16. Advantageous embodiments thereof are defined in the respective dependent claims.

### DETAILED DESCRIPTION OF THE INVENTION

In the following, the invention will be described in further details with reference to the drawing in which:

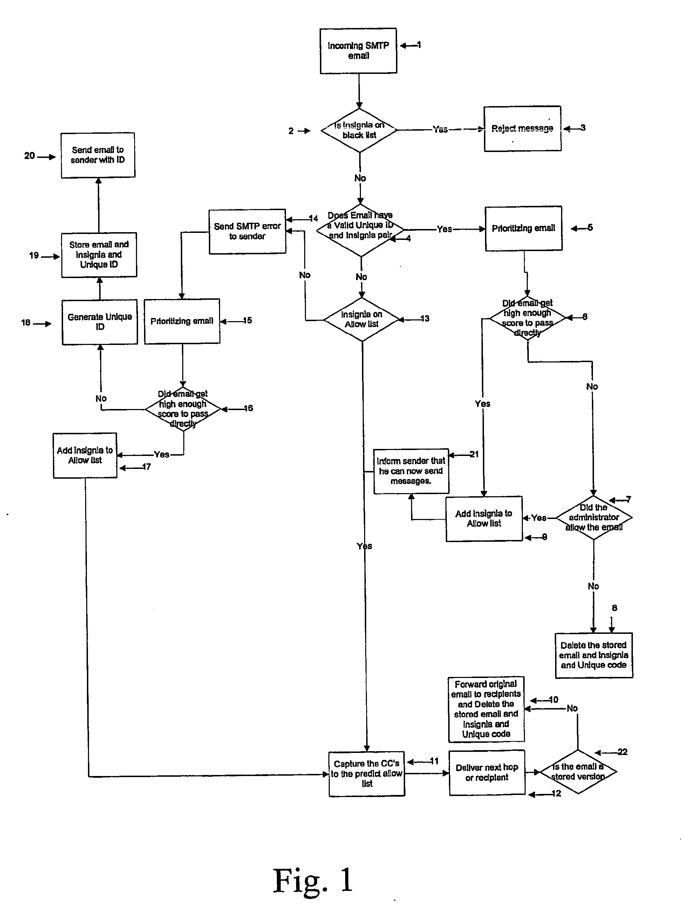

Figs. 1 and 2 show a diagram of a software implemented filter for filtering spam messages from desired messages, and
Fig. 3 shows a screen dump from a computer implementation of the invention.

The following description is based on the implementation of the invention in a computer system for filtering e-mail messages. The implementation is done as a SMTP gateway but it could also have been implemented as a part of a messaging system (e.g. Microsoft Exchange server, Lotus Notes or Novell GroupWise). Reference is further made to the "Simple mail transfer protocol", Jonathan B. Postel, RFC 821 of August 1982 from Information Sciences Institute, University of Southern California, Marina del Rey, California and STANDARD FOR THE FORMAT OF ARPA INTERNET TEXT MESSAGES August 13, 1982 Revised by David H. Crocker Dept. of Electrical Engineering University of Delaware, Newark, DE 19711 Network: DCrocker @ UDel-Relay.

### Incoming Emails:

An email is received from the sender via the SMTP daemon on TCP port 25 (RFC 821) on the receiving server **1.** The receiving server then extracts the sender insignia from the *Mail From:* on the SMTP protocol and the IP address of the sending server from the IP protocol **1.** The receiving server then checks the insignia against the black list **2** if the insignia is included in the black list, the email is rejects and the sender's server is informed about this via an error message on the SMTP protocol **3.**

If the insignia is not included in the black list the receiving server checks the subject line from the mime message (RFC 822, i.e. STANDARD FOR THE FORMAT OF ARPA INTERNET TEXT MESSAGES August 13, 1982, Revised by David H. Crocker. www.faqs.org/rfcs/rfc822.html) for a unique code and compares this code and the insignia with the list of previously generated key pairs **4.** If the incoming email does not contain a valid key pair the receiving server then checks if the insignia is on the allow list **13.** If the insignia is not on the allow list the receiving server will send back a reply request to the sender by doing the steps described in the following text. The receiving server generates an error message on the SMTP protocol that informs the sending server that the email could not be received because the sender is not registered as a valid sender of mail to the receiver **14.** After this step, the SMTP communication is either closed by the sending server or a new email is delivered to the receiving server. The receiving server then prioritizes the incoming email according to a given rule set and assigns a priority value to the email message **15.** If the assigned value is not exceeding a given threshold value a Unique ID is generated by the receiving system **18.** The incoming email, insignia and Unique ID is then stored by the receiving server for later retrieval **19.** The receiving server sends an email to the sender of the incoming email asking to reply to it without changing the subject line of the mime message (RFC 822) **20.**

If the incoming email did get a priority value exceeding the given threshold value **16** the insignia of the sender is added to the allow list **17.**

If the incoming email sender insignia was on the allow list **13** then the receiving server captures the CC: from the mime message and stores them the predict allow list for later retrieval **11.** The email is then delivered to the recipient mail box or forwarded to the next step **12.**

If the email did contain a valid key pair **4** the receiving server will prioritize the email message and assign it a priority value **5.** If the assigned value is not exceeding a given threshold the choice of allowing the email is up to the administrator **7.** If the email is not approved by the administrator the original message, unique ID and insignia is deleted from storage space **8.**If the email is approved by the administrator or had a priority value exceeding the threshold **6** the insignia is added to the allow list **9.** The receiving system then informs the sender by sending an email that he can now send emails to the recipient and that the previously.sent email will be delivered **21.**The receiving system captures the CC: from the mime message and stores them in the predict allow list for later retrieval **11.**

The email is then delivered to the recipient mail box or forwarded to the next hop **12.** Then the receiving system deletes the Email, insignia and unique ID from storage **10.**

### Outgoing Emails:

An email is received from the sender via the SMTP daemon on TCP port 25 (RFC 821) on the server **23** from an internal sender. The server adds the insignia of the recipient/recipients captured from the SMTP *rcpt to:* (RFC 821) on the Allow list **24.** The email is delivered to the recipients SMTP via TCP port 25 (RFC 821) **25.**

### Description of technical terms in one specific implementation of the invention:

The simplest form of an insignia is an email address or the domain part of the sender's email address. More complex insignias can include an email address with or without a list of IP addresses from which a user can send. Alternatively, the insignia may include a domain with or without a list for IP addresses from which the user from that domain can send.

The domain part could be defined as the sub string starting after the '@' sign and ending at the end of the email address including the last character.

The storage space could be defined as space on a harddisk or space on a set of harddisks (Raid set) in which the insignias are stored as records on the insignia list (allow list and predict allow list). An allow list can in the simplest form consists of only sender insignias or more complex to allow fine grained control by making a list that includes a relationship between a sender insignia and a recipient insignia.

The system is connected to the internet and running a SMTP daemon on TCP port 25 from which it can receive incoming messages from senders connected to the same net.

Using the SMTP protocol specified in RFC 821 the system captures the sender's email address, i.e. an identification insignia from the *mail from:* command. Further the system captures the sender's IP address from the TCP layer. By use of the SMTP protocol specified in RFC 821 the system captures the recipient's email address insignia from the *rcpt to:* command.

The system compares the sender insignia with the insignias stored in the allow list using the same type of insignia record (simple or complex) as defined by the allow list record for a specific record.

The Message and the insignia could be stored in a space on a harddisk or in a space on a set of harddisks (Raid set) in which the message and insignia is stored for later retrieval.

If the identification insignia is not included in the allowed list, a return mail to the sender is generated in program memory and send to the sender via the STMP daemon using TCP PORT 25.This return message subject field (RFC 822) includes a 128 bit value code converted to a string plus a word that can be scanned for in the incoming email messages (e.g. ID= C4389FBD-0872-4077-8FFF-0001901F1D89). The code is generated by making a random 128 bit number and then converting it to a string. Subsequently, the unique code and a relation between the insignia are stored as a key pair in a space on a harddisk or space on a set of harddisks (Raid set). The insignia is stored with a pointer to the code for later retrieval.

Capturing the unique ID can be done by scanning the incoming email messages subject field (RFC 822) for a word (e.g. ID=) and then capturing the substring containing the next 19 characters after the ID=.

Checking the validity for an incoming unique id and insignia can be done by matching up the key pair represented by these two values and the key pair list generated by the first message.

Prioritizing the message can be done by having static or dynamic lists of words, email addresses (predicts allow list) and/or domains which is assigned a weight value stored in a space on a harddisk or in a space on a set of harddisks (Raid set). The entities in the list are then compared to the content of the message and insignias word by word or insignia by insignia. A value equal to the sum of the weights values for all matches is attached to the message as a priority value.

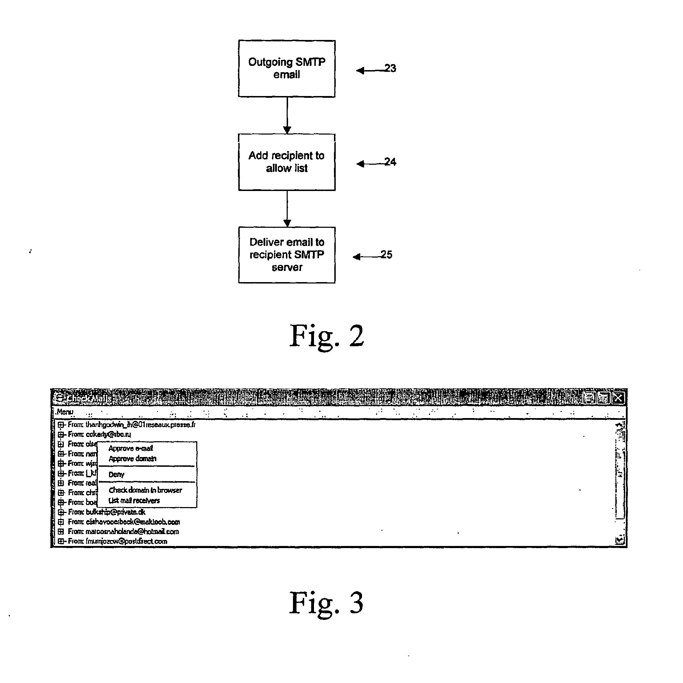

The choice of allowing the message could be up to the administrator. For this purpose a GUI is designed to display the needed information for the administrator to make the choice in a list sorted by the priority value -the higher the value the more important the message is. The GUI in question is shown in Fig. 3.

An internal sender can be detected by using the sender's IP address and matching it to a list consisting of predetermine address IP for internal sender. The list could be stored as records in a database on a space on a harddisk or in a space on a set of harddisks (Raid set).

## Claims

1. A filter for filtering electronic messages, said filter comprising:
- storage space for an allowed list comprising identification insignias of senders which have been approved for sending messages to a recipient,
- means for receiving a first electronic message from a sender,
- means for capturing from the message an identification insignia of the sender,
- means for capturing from the message an identification insignia of the recipient,
- first check means for comparing the identification insignia of the sender with the allowed list for determining either to withhold the message or to forward the message to the recipient,
- means for storing the message and the insignia of the sender,
- means for generating and for returning a return message to the sender in case the identification insignia of the sender is not included in the allowed list, the means for returning the message being adapted to include in the returned message a unique code, and a message for the sender to reply to the returned message by sending it back without changing the unique code,
- means for storing the unique code and relating it to the insignia of the sender, and
- second check means for receiving a second electronic message and for recognising the second message being a reply to the returned message,
**characterised in that** the filter further comprises:
- prioritising means which, in response to recognition of the second message being a reply to the returned message, assigns a priority to each of the identification insignias of the senders of the first messages, and
- means for selecting identification insignias of the senders and adding the selected insignias to the allowed list, wherein the means for selecting are adapted to carry out the selection according to the priorities assigned to the identification insignias of the senders.

2. A filter according to claim 1, wherein the second check means performs the recognition by:
- capturing in the second message the unique code, and a second identification insignia of the sender of the second message, and
- checking that the unique code has not changed, and that the second identification insignia corresponds to the first identification insignia.

3. A filter according to claim 1 or 2, further comprising means for capturing from a server a list comprising at least one address from which the sender has access to send messages.

4. A filter according to claim 3, further comprising means for checking that the sender is sending from an address included in the list.

5. A filter according to any of the preceding claims, further comprising means for generating a predict allowed list comprising identification insignias of third party message recipients included by the sender in the first or the second electronic message.

6. A filter according to any of the preceding claims, further comprising rule based selection means which, based on recognition of a specific pattern in the content of the message sets the priority of the identification insignias.

7. A filter according to any of the preceding claims, further comprising means for automatically selection of insignias with priorities above a predetermined value for the allowed list.

8. A filter according to any of the preceding claims, wherein the identification insignias of the senders and the data identifying the sender include at least a domain identification of the sender's electronic mail address.

9. A filter according to any of the preceding claims, further comprising means for withholding the electronic message from final delivery to the intended recipient until an administrator has accepted delivery of the message to the recipient, the administrator being one of a human administrator, a software-implemented administrator, and the recipient of the message.

10. A filter according to any of the preceding claims, further comprising storage for a black-list, and means for checking occurrence of an identification insignia in the black-list prior to comparing the identification insignia with the allowed list.

11. A filter according to any of the preceding claims, comprising means for communicating, in an SMTP message, and in response to receiving the message from a sender with an insignia not included in the allowed list or optionally, with an insignia included in the black-list, that the message could not be delivered to the recipient.

12. A filter according to claim 11, comprising counting means for counting a number of reoccurrences of identical messages being received, and for adding the insignia of the sender of such messages which reoccur more than a pre-specified number of times to the black-list.

13. A filter according to any of the preceding claims, comprising means for adding to the allowed list, insignias of potential senders to whom the recipient has previously been sending messages.

14. A filter according to any of the preceding claims, comprising means for measuring a frequency of messages to and from a specific sender, and upon detection of frequencies above a pre-specified level, for forwarding the first message to the recipient irrespective if the insignia of the sender is not in the allowed list.

15. A filter according to any of the preceding claims, wherein the means for generating a return message to the sender is adapted to send the return message by use of an identification insignia corresponding to the identification insignia of the intended recipient of the first message.

16. A method for filtering electronic messages, said method comprising the steps of:
- assigning space in a computer system for a list comprising identification insignias of senders which have been approved for sending messages to a recipient,
- receiving a first electronic message from a sender,
- capturing from the message an identification insignia of the sender,
- capturing from the message an identification insignia of the recipient,
- comparing the identification insignia of the sender with the allowed list for determining either to withhold the message or to forward the message to the recipient,
- storing the message and the insignia of the sender in a storage space of the computer system,
- generating and returning a return message to the sender in case the identification insignia of the sender is not included In the allowed list, and including in the returned message a unique code, and a message for the sender to reply to the return message by sending it back without changing the unique code,
- storing the unique code and relating it to the insignia of the sender, and
- receiving a second electronic message and recognising the second message being a reply to the returned message,
**characterised in that** the method comprises the steps of:
- in response to recognition of the second message being a reply to the returned message, assigning a priority to each of the identification insignias of the senders of the first messages, and
- selecting identification insignias of the senders and adding the selected insignias to the allowed list, wherein the selecting is carried according to the priorities assigned to the identification insignias of the senders.

## Patentansprüche

1. Filter zum Filtern elektronischer Nachrichten, wobei das Filter umfasst:
- Speicherraum für eine Zulassungsliste, die Identifizierungskennzeichen von Sendern enthält, denen genehmigt worden ist, Nachrichten zu einem Empfänger zu senden,
- Mittel zum Empfangen einer ersten elektronischen Nachricht von einem Sender,
- Mittel zum Entnehmen eines Identifizierungskennzeichens des Senders aus der Nachricht,
- Mittel zum Entnehmen eines Identifizierungskennzeichens des Empfängers aus der Nachricht,
- erste Prüfmittel zum Vergleichen des Identifizierungskennzeichens des Senders mit der Zulassungsliste, um zu bestimmen, ob die Nachricht zurückgehalten oder ob die Nachricht zu dem Empfänger weitergeleitet werden soll,
- Mittel zum Speichern der Nachricht und des Kennzeichens des Senders,
- Mittel zum Erzeugen und Zurückleiten einer Rücknachricht zu dem Sender in dem Fall, in dem das Identifizierungskennzeichen des Senders nicht in der Zulassungsliste enthalten ist, wobei die Mittel zum Zurückleiten der Nachrichten so beschaffen sind, dass sie in die zurückgeleitete Nachricht einen eindeutigen Code und eine Nachricht für den Sender aufnehmen, damit er auf die zurückgeleitete Nachricht durch Zurücksenden der Nachricht ohne Änderung des eindeutigen Codes antwortet,
- Mittel zum Speichern des eindeutigen Codes und zum Herstellen einer Beziehung zwischen ihm und dem Kennzeichen des Senders, und
- zweite Prüfmittel zum Empfangen einer zweiten elektronischen Nachricht und zum Erkennen, dass die zweite Nachricht eine Antwort auf die zurückgeleitete Nachricht ist,
**dadurch gekennzeichnet, dass** das Filter ferner umfasst:
- Prioritätszuteilungsmittel, die in Reaktion auf die Erkennung, dass die zweite Nachricht eine Antwort auf die zurückgeleitete Nachricht ist, jedem der Identifizierungskennzeichen der Sender der ersten Nachricht eine Priorität zuweisen und
- Mittel zum Auswählen von Identifizierungskennzeichen der Sender und zum Hinzufügen der ausgewählten Kennzeichen zu der Zulassungsliste, wobei die Mittel zum Auswählen ausgelegt sind, um die Auswahl in Übereinstimmung mit den Prioritäten, die den Identifizierungskennzeichen der Sender zugewiesen sind, auszuführen.

2. Filter nach Anspruch 1, wobei die zweiten Prüfmittel die Erkennung ausführen durch:
- Entnehmen des eindeutigen Codes und eines zweiten Identifizierungskennzeichens des Senders der zweiten Nachricht aus der zweiten Nachricht und
- Prüfen, ob sich der eindeutige Code nicht geändert hat und ob das zweite Identifizierungskennzeichen dem ersten Identifizierungskennzeichen entspricht.

3. Filter nach Anspruch 1 oder 2, das ferner Mittel umfasst, um von einem Server eine Liste aufzufangen, die wenigstens eine Adresse enthält, von der aus der Sender Zugang hat, um Nachrichten zu senden.

4. Filter nach Anspruch 3, das ferner Mittel umfasst, um zu prüfen, dass der Sender von einer in der Liste enthaltenen Adresse sendet.

5. Filter nach einem der vorhergehenden Ansprüche, das ferner Mittel umfasst, um eine vorhergesagte Zulassungsliste zu erzeugen, die Identifizierungskennzeichen dritter Nachrichtenempfänger enthält und durch den Sender in die erste oder in die zweite elektronische Nachricht eingebaut wird.

6. Filter nach einem der vorhergehenden Ansprüche, das ferner regelbasierte Auswahlmittel umfasst, die anhand der Erkennung eines bestimmten Musters in dem Inhalt der Nachricht die Priorität der Identifizierungskennzeichen festlegen.

7. Filter nach einem der vorhergehenden Ansprüche, das ferner Mittel umfasst, um Kennzeichen, die Prioritäten oberhalb eines vorgegebenen Wertes besitzen, automatisch für die Zulassungsliste auszuwählen.

8. Filter nach einem der vorhergehenden Ansprüche, wobei die Identifizierungskennzeichen der Sender und die Daten, die den Sender identifizieren, wenigstens eine Domänenidentifizierung der Email-Adresse des Senders enthalten.

9. Filter nach einem der vorhergehenden Ansprüche, das ferner Mittel umfasst, um die Email vor einer endgültigen Ausgabe zu dem beabsichtigten Empfänger zurückzuhalten, bis ein Administrator die Ausgabe der Nachricht zu dem Empfänger akzeptiert hat, wobei der Administrator ein menschlicher Administrator, ein softwareimplementierter Administrator oder der Empfänger der Nachricht ist.

10. Filter nach einem der vorhergehenden Ansprüche, das ferner Speicher für eine schwarze Liste und Mittel zum Prüfen des Vorhandenseins eines Identifizierungskennzeichens in der schwarzen Liste vor dem Vergleich des Identifizierungskennzeichens mit der Zulassungsliste umfasst.

11. Filter nach einem der vorhergehenden Ansprüche, das Mittel umfasst, um in einer SMTP-Nachricht und in Reaktion auf den Empfang der Nachricht von einem Sender, die ein nicht in der Zulassungsliste enthaltenes Kennzeichen hat oder ein in der schwarzen Liste enthaltendes Kennzeichen hat, mitzuteilen, dass die Nachricht zu dem Empfänger nicht ausgegeben werden konnte.

12. Filter nach Anspruch 11, das Zählmittel umfasst, um die Anzahl des erneuten Auftretens des Empfangs identischer Nachrichten zu zählen und um das Kennzeichen des Senders solcher Nachrichten, die öfter als in einer im Voraus spezifizierten Anzahl erneut auftreten, zu der schwarzen Liste hinzuzufügen.

13. Filter nach einem der vorhergehenden Ansprüche, das Mittel umfasst, um zu der Zulassungsliste Kennzeichen potentieller Sender hinzuzufügen, zu denen der Empfänger früher Nachrichten gesendet hat.

14. Filter nach einem der vorhergehenden Ansprüche, das Mittel umfasst, um eine Häufigkeit von Nachrichten zu und von einem bestimmten Sender zu messen und um bei Erfassung von Häufigkeiten oberhalb eines im Voraus spezifizierten Niveaus die erste Nachricht zu dem Empfänger unabhängig davon weiterzuleiten, ob das Kennzeichen des Senders in der Zulassungsliste ist oder nicht.

15. Filter nach einem der vorhergehenden Ansprüche, wobei die Mittel zum Erzeugen einer Rücknachricht zu dem Sender so beschaffen sind, dass sie die Rücknachricht durch Verwenden eines Identifizierungskennzeichens senden, das dem Identifizierungskennzeichen des beabsichtigten Empfängers der ersten Nachricht entspricht.

16. Verfahren zum Filtern elektronischer Nachrichten, wobei das Verfahren die folgenden Schritte umfasst:
- Zuweisen von Raum in einem Computersystem für eine Liste, die Identifizierungskennzeichen von Sendern enthält, für die das Senden von Nachrichten zu einem Empfänger genehmigt worden ist,
- Empfangen einer ersten elektronischen Nachricht von einem Sender,
- Entnehmen eines Identifizierungskennzeichens des Senders aus der Nachricht,
- Entnehmen eines Identifizierungskennzeichens des Empfängers aus der Nachricht,
- Vergleichen des Identifizierungskennzeichens des Senders mit der Zulassungsliste, um zu bestimmen, ob die Nachricht entweder zurückgehalten werden soll oder ob die Nachricht zu dem Empfänger weitergeleitet werden soll,
- Speichern der Nachricht und des Kennzeichens des Senders in einem Speicherraum des Computersystems,
- Erzeugen und Zurückleiten einer Rücknachricht zu dem Sender in dem Fall, in dem das Identifizierungskennzeichen des Senders nicht in der Zulassungsliste enthalten ist, und Aufnehmen eines eindeutigen Codes und einer Nachricht für den Sender, damit er auf die Rücknachricht durch Zurücksenden der Rücknachricht ohne Ändern des eindeutigen Codes antwortet, in die zurückgeleitete Nachricht,
- Speichern des eindeutigen Codes und Herstellen einer Beziehung zwischen ihm und dem Kennzeichen des Senders, und
- Empfangen einer zweiten elektronischen Nachricht und Erkennen, dass die zweite Nachricht eine Antwort auf die zurückgeleitete Nachricht ist,
**dadurch gekennzeichnet, dass** das Verfahren die folgenden Schritte umfasst:
- in Reaktion auf die Erkennung, dass die zweite Nachricht eine Antwort auf die zurückgeleitete Nachricht ist, Zuweisen einer Priorität zu jedem der Identifizierungskennzeichen der Sender der ersten Nachricht und
- Auswählen von Identifizierungskennzeichen der Sender und Hinzufügen der ausgewählten Kennzeichen zu der Zulassungsliste, wobei das Auswählen in Übereinstimmung mit den Prioritäten, die den Identifizierungskennzeichen der Sender zugewiesen werden, ausgeführt wird.

## Revendications

1. Un filtre pour filtrer les messages électroniques, ledit filtre comprenant :
- un espace mémoire pour une liste autorisée comprenant les insignes d'identification des expéditeurs qui ont été agréés pour envoyer des messages à un destinataire,
- un moyen pour recevoir un premier message électronique d'un expéditeur,
- un moyen de saisir, à partir du message, un insigne d'identification de l'expéditeur,
- un moyen de saisir, à partir du message, un insigne d'identification du destinataire,
- un moyen de vérification pour comparer l'insigne d'identification de l'expéditeur avec la liste autorisée pour déterminer soit de refuser le message, soit de transmettre le message au destinataire,
- un moyen pour stocker le message et l'insigne de l'expéditeur,
- un moyen pour générer et pour renvoyer un message de retour à l'expéditeur dans le cas où l'insigne d'identification de l'expéditeur ne figure pas dans la liste autorisée, le moyen de renvoi du message étant adapté pour inclure dans le message renvoyé un code unique, et un message pour l'expéditeur pour répondre au message renvoyé en le réexpédiant sans changer le code unique,
- un moyen pour mémoriser le code unique et l'affecter à l'insigne de l'expéditeur, et
- un deuxième moyen de vérification pour recevoir un deuxième message électronique et pour reconnaître le deuxième message en tant que réponse au message renvoyé,
**caractérisé en ce que** le filtre comprend en outre :
- un moyen de hiérarchisation qui, en réponse à la reconnaissance du deuxième message en tant que réponse au message renvoyé, attribue une priorité à chacun des insignes d'identification des expéditeurs des premiers messages, et
- des moyens pour sélectionner les insignes d'identification des expéditeurs et ajouter les insignes sélectionnés à la liste autorisée, les moyens de sélection étant adaptés pour effectuer la sélection selon les priorités attribuées aux insignes d'identification des expéditeurs.

2. Un filtre selon la revendication 1 dans lequel le deuxième moyen de vérification effectue la reconnaissance en :
- saisissant, dans le deuxième message, le code unique, et un deuxième insigne d'identification de l'expéditeur du deuxième message, et
- vérifiant que le code unique n'a pas changé, et que le deuxième insigne d'identification correspond au premier insigne d'identification.

3. Un filtre selon les revendications 1 ou 2, comprenant en outre un moyen de saisir, à partir d'un serveur, une liste comprenant au moins une adresse à partir de laquelle l'expéditeur a accès pour envoyer des messages.

4. Un filtre selon la revendication 3, comprenant en outre un moyen pour vérifier que l'expéditeur effectue son envoi à partir d'une adresse qui figure sur la liste.

5. Un filtre selon l'une quelconque des revendications précédentes, comprenant en outre un moyen pour générer une liste préétablie autorisée comprenant les insignes d'identification de destinataires tiers de messages inclus par l'expéditeur dans le premier ou le deuxième message électronique.

6. Un filtre selon l'une quelconque des revendications précédentes, comprenant en outre un moyen de sélection à la base de règles, qui, sur la base de la reconnaissance d'un modèle spécifique dans le contenu du message, établit la priorité des insignes d'identification.

7. Un filtre selon l'une quelconque des revendications précédentes, comprenant en outre un moyen pour sélectionner automatiquement les insignes, avec les priorités ci-dessus, d'une valeur prédéterminée pour la liste autorisée.

8. Un filtre selon l'une quelconque des revendications précédentes, dans lequel les insignes d'identification des expéditeurs et les données qui identifient l'expéditeur comportent au moins une identification de domaine de l'adresse électronique e-mail de l'expéditeur.

9. Un filtre selon l'une quelconque des revendications précédentes, comprenant en outre un moyen pour refuser que le message électronique soit transmis au destinataire à qui le message est destiné, jusqu'à ce qu'un administrateur ait accepté la transmission du message au destinataire, l'administrateur étant un administrateur humain, un administrateur implémenté par logiciel, et le destinataire du message.

10. Un filtre selon l'une quelconque des revendications précédentes, comprenant en outre la mémorisation sur une liste rouge, et un moyen pour vérifier l'apparition d'un insigne d'identification dans la liste rouge avant de comparer l'insigne d'identification avec la liste autorisée.

11. Un filtre selon l'une quelconque des revendications précédentes, comprenant un moyen de communication, en message de type SMTP, et en réponse à la réception du message à partir d'un expéditeur dont l'insigne ne figure pas sur la liste autorisée, ou, en option, avec un insigne figurant sur la liste rouge, que le message n'a pas pu être transmis au destinataire.

12. Un filtre selon la revendication 11, comprenant un moyen de comptage pour compter un nombre de réapparitions de messages identiques reçus, et pour ajouter l'insigne de l'expéditeur de tels messages qui reviennent plus souvent qu'un nombre de fois spécifié au préalable sur la liste rouge.

13. Un filtre selon l'une quelconque des revendications précédentes, comprenant un moyen pour ajouter à la liste autorisée des insignes d'expéditeurs potentiels auxquels le destinataire a envoyé des messages au paravent.

14. Un filtre selon l'une quelconque des revendications précédentes, comprenant un moyen pour mesurer la fréquence de messages adressés à un expéditeur spécifique ou envoyé à partir d'un expéditeur spécifique, et sur détection de fréquences au-dessus d'un niveau spécifié au préalable, pour transmettre le premier message au destinataire, indépendamment du fait que l'insigne de l'expéditeur ne figure pas dans la liste autorisée.

15. Un filtre selon l'une quelconque des revendications précédentes, dans lequel le moyen pour générer un retour de message à l'expéditeur est adapté pour envoyer le retour de message à l'aide d'un insigne d'identification correspondant à l'insigne d'identification du destinataire prévu du premier message.

16. Un processus de filtrage de messages électroniques, lequel processus comprenant les phases suivantes :
- affecter un espace sur le système d'ordinateur pour une liste comprenant les insignes d'identification d'expéditeurs qui ont été autorisés à envoyer des messages à un destinataire,
- recevoir un premier message électronique émanant d'un expéditeur,
- saisir, à partir du message, un insigne d'identification de l'expéditeur,
- saisir, à partir du message, un insigne d'identification du destinaire,
- comparer l'insigne d'identification de l'expéditeur avec la liste autorisée pour déterminer si le message doit être refusé ou transmis au destinataire,
- stocker le message et l'insigne de l'expéditeur dans l'espace mémoire du système de l'ordinateur,
- générer et renvoyer un message de retour à l'expéditeur dans le cas où l'insigne d'identification de l'expéditeur ne figure pas dans la liste autorisée, et contenant, dans le message de retour, un code unique, et un message à l'expéditeur demandant une réponse au message de retour en le renvoyant sans changer le code unique,
- mémoriser le code unique et affectant celui-ci à l'insigne de l'expéditeur, et
- recevoir un deuxième message électronique et reconnaître le deuxième message en tant que réponse au message retourné,
**caractérisé en ce que** le processus comprend les phases suivantes :
- en réponse à la reconnaissance du deuxième message en tant que réponse au message retourné, attribuant une priorité à chacun des insignes d'identification des expéditeurs des premiers messages, et
- sélectionner les insignes d'identification des expéditeurs et ajouter les insignes à la liste autorisée, dans lequel la sélection est effectuée selon les priorités attribuées aux insignes d'identification des expéditeurs.
